# EUROPEAN PATENT SPECIFICATION

(11) **EP 0 541 889 B1**
(45) Date of publication and mention of the grant of the patent: **09.09.1998**
(21) Application number: 92103986.3
(22) Date of filing: 09.03.1992
(51) Int. Cl.: H01M 4/58, H01M 10/40

(54) **Lithium secondary battery**
Lithium-Sekundärbatterie
Batterie secondaire au lithium

(30) Priority: 12.11.1991 JP 295835/91; 03.12.1991 JP 319200/91; 10.12.1991 JP 325778/91; 27.12.1991 JP 360254/91
(43) Date of publication of application: 19.05.1993
(73) Proprietor: SANYO ELECTRIC CO., LIMITED., Moriguchi City, Osaka (JP)
(72) Inventor: Fujimoto, Masahisa, Osaka (JP); Yoshinaga, Noriyuki, Hirakata-shi, Osaka (JP); Ueno, Koji, Higashiosaka-shi, Osaka (JP); Furukawa, Nobuhiro, Hirakata-shi, Osaka (JP); Nohma, Toshiyuki, Kadoma-shi, Osaka (JP); Takahashi, Masatoshi, Neyagawa-shi, Osaka (JP)
(74) Representative: VOSSIUS & PARTNER

(56) References cited:
- EP-A- 0 118 026
- EP-A- 0 165 589
- EP-A- 0 346 088
- EP-A- 0 474 183
- US-H- 1 076

## Description

The present invention relates to a lithium secondary battery, and more specifically to improvement of the electrolyte solution of a lithium secondary battery comprising as a negative electrode material a carbon material comprising graphite as an only or principal component.

In recent years, carbon materials have been studied, instead of conventional lithium alloys, for the use of negative electrode material for lithium secondary batteries because ① they have high flexibility and ② they do not cause mossy-shaped lithium to precipitate by electrolysis.

The carbon material that has principally been studied for this purpose is coke, and graphite has not been studied. Coke, however, hardly provides large-capacity batteries, since the amount of lithium introduced with coke negative electrode is not sufficiently large. To the best of the knowledge of the present inventors, the only literature that proposes a secondary battery having a negative electrode comprising graphite is US-A-4,423,125.

The above US-A discloses a secondary battery comprising for the negative electrode a carbon material having occluded lithium as an active material and as an electrolyte solution a solution of an electrolyte solute of LiAsF₆ dissolved in a solvent of 1,3-dioxolane. According to the USP, a secondary battery having excellent cycle characteristics can then be obtained.

The above known secondary battery is, however, inferior in many features such as capacity per unit weight of graphite (mAh/g), initial charge and discharge efficiency (%), battery capacity (mAh), self-discharge rate (%/month) and charge and discharge efficiency (%), not to mention cycle characteristics (cycle life), as shown as "conventional battery" in the later-described Examples. The battery therefore is not sufficiently satisfactory for practical purposes.

This is considered to be due to polymerization of 1,3-dioxolane in the negative electrode side (reduction side). EP-A-0 165 589 discloses a secondary battery having two electrodes, optionally with a separator in-between, and an electrolytic solution interposed between the electrodes, and wherein the anode and the cathode are made of graphite. EP-A-0 346 088 proposes an electrode comprising a graphite composition, wherein this graphite composition is composed of high-crystalline graphite and low-crystalline graphite. EP-A-0 118 026 discloses a secondary cell with two electrodes made of a polymeric material and graphite, respectively.

Accordingly, an object of the invention is to provide a lithium secondary battery having a negative electrode of graphite, having a large capacity, small self-discharge rate and excellent cycle characteristics and still having high charge and discharge efficiency.

This object is solved with the features of the claims.

A more complete appreciation of the invention and many of the attendant advantages thereof will be readily obtained as the same become better understood by reference to the following detailed description when considered in connection with the accompanying drawings, wherein:
FIGURE 1 is a graph showing the charge-discharge cycle characteristics of the battery of the present invention and a comparison battery (coke negative electrode);
FIGURE 2 is a sectional view of a cylindrical battery;
FIGURE 3 is a graph showing the charge-discharge characteristics of the batteries BA1 through BA3 of the present invention and the comparison battery BC1;
FIGURE 4 is a graph showing the charge-discharge characteristics of the battery BA1 of the present invention;
FIGURE 5 is a graph showing the charge-discharge characteristics of the battery BA2 of the present invention;
FIGURE 6 is a graph showing the cycle characteristics of the batteries BA1 and BA2 of the present invention and the comparison battery BC1;
FIGURE 7 is a graph showing the cycle characteristics of the battery BA4 of the present invention;
FIGURE 8 is a graph showing the cycle characteristics of the battery BA5 of the present invention;
FIGURE 9 is a graph showing the charge-discharge characteristics of the batteries BA6 of the present invention, a comparison battery BC2 and a conventional battery;
FIGURE 10 is a graph showing the relationship between the d₀₀₂ value of a carbon material and the discharge capacity of the battery utilizing a negative electrode of the carbon material;
FIGURE 11 is a graph showing the relationship between the true density of a carbon material and the discharge capacity of the battery;
FIGURE 12 is a graph showing the relationship between the average particle diameter of a carbon material and the discharge capacity of the battery;
FIGURE 13 is a graph showing the relationship between the specific surface area of a carbon material and the discharge capacity of the battery;
FIGURE 14 is a graph showing the relationship between the Lc value of a carbon material and the discharge capacity of the battery; and
FIGURES 15 through 17 are graphs showing the relationships between the mixing ratio by volume of components in various mixed solvents and the battery capacity.

Examples of the compound that constitutes the positive electrode material in the present invention and is capable of occluding and discharging lithium are, as inorganic compounds, oxides having what is known as tunnel-shaped pores, such as MnO₂, TiO₂ and V₂O₅, and metal chalcogenides such as TiS₂ and MoS₂ having laminar structure, among which preferred are composite oxides represented by the formula LiₓMO₂ or Li_{y}M₂O₄, wherein M is a transition element and 0 ≦ x ≦ 1 and 0 ≦ y ≦ 2. Concrete examples of the composite oxides are LiCoO₂, LiMnO₂, LiNiO₂, LiCrO₂ and LiMn₂O₄.

Examples of organic compounds used for the above purpose are conductive polymers such as polyaniline and dopant-containing conductive polymers such as polyaniline incorporating a dopant of a perfluorocarbonsulfonic acid represented by the following general formula (Nafion, made by du Pont Co.) or porphyrin.

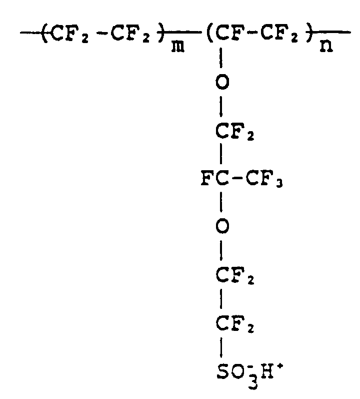

Also usable for this purpose are graphite intercalation compounds, e.g. those comprising a metal oxide such as LiCoO₂, LiMnO₂, Li₂FeO₃ or LiCrO₂ inserted between the layers of the graphite, those comprising an anion inserted between the layers of the graphite, those comprising a halogen or halogen compound inserted between the layers of the graphite and those comprising porphyrin inserted between layers of the graphite.

The positive electrode material is kneaded with a conductor such as acetylene black or carbon black and a binder such as polytetrafluoroethylene (PTFE) or polyvinylidene fluoride (PVdF), and the obtained mixture is used as a material for preparing positive electrode.

At this time, among the above conductive polymers and dopant-containing conductive polymers, those having high conductivity may be kneaded only with a binder, without incorporation of any conductor.

In the present invention, the negative electrode material is a carbon material containing a graphite as an only or principal component. It is desirable that the graphite used in the present invention have the following properties.
① an average particle diameter of 1 to 30 µm;
② a d-value (d₀₀₂) of the lattice plane (002) of 3.35 to 3.40 Å;
③ a crystallite size (Lc) in the direction of the c-axis of at least 150 Å;
④ a specific surface area of 0.5 to 50 m²/g; and
⑤ a true density of 1.9 to 2.3 g/cm³.

Further desirable properties of the graphite used in the present invention are as follows. The size of crystallite in the a-axis direction is at least 150 Å; the atomic ratio of H/C is not more than 0.1 and the G-value (1360 cm⁻¹/1590 cm⁻¹) in Raman spectroscopic analysis is at least 0.05.

Any graphite can be suitably used in the present invention, whether it be natural graphite, artificial graphite or kish. Here, kish is a carbon material having higher crystallinity than natural graphite and formed, when in iron mills iron is melted in the blast furnace at a temperature of at least 2,000°C, by sublimation and the succeeding deposition onto the furnace wall and recrystallization of the carbon contained in the iron. Further these graphites may as required be used in combination. The artificial graphite herein includes graphite-based substances formed by processing or modifying graphite, such as swollen graphite.

Examples of natural graphite are Sri Lanka graphite, Madagascar graphite, Korea flake-graphite, Korea earth-graphite and China graphite, and an example of artificial graphite is coke-origin-graphite.

Table 1 shows the d-values of the lattice plane (002) and Lc's in of the above natural graphites and artificial coke-origin-graphite.

**Table 1**

| | Lattice constant d(002) (Å) | Crystallite size, Lc (Å) |
|---|---|---|
| Natural graphite | | |
| Sri Lanka | 3.358 | > 1,000 |
| Madagascar | 3.359 | > 1,000 |
| Korea (flake) | 3.360 | > 1,000 |
| Korea (earth) | 3.365 | 230 |
| China | 3.354 | > 1,000 |
| Artificial coke-origin-graphite | 3.364 | 350 |

Examples of commercially available natural graphite used in the present invention are "NG-2", "NG-2L", "NG-4", "NG-4L", "NG-7", "NG-7L", "NG-10", "NG-10L", "NG-12", "NG-12L", "NG-14", "NG-14L", "NG-100" and "NG-100L", which are high-purity graphite having a purity of at least 99% and made by The Kansai Coke and Chemicals Co., Ltd.; "CX-3000", "FBF", "BF", "CBR", "SSC-3000", "SSC-600", "SSC-3", "SSC", "CX-600", "CPF-8", "CPF-3", "CPB-6S", "CPB", "96E", "96L", "96L-3", "90L-", "CPC", "S-87", "K-3", "CF-80", "CF-48", "CF-32", "CP-150", "CP-100", "CP", "HF-80", "HF-48", "HF-32", "SC-120", "SC-80", "SC-60" and "SC-32" (the foregoing are flake-graphites) and "APF-3000", "APF" , "AX-600", "S-3", "AP-6", "AP-3", "300F" and "150F" (the foregoing are earth-graphites) which are made by Chuetsu Graphite Works Co., Ltd.; "CSSP", "CSPE", "CSP", "Super-CP", "CP", "CP·B", "CB-150", "CB-100", "F#1", "F#2", "F#3", "SF·A" and "SF·B", (the foregoing are flake-graphites), "AOP", "AUP", "ASSP", "ASP", "AP", "Blue P", "APB", "PD", "CA.C" and "P#1" (the foregoing are earth-graphite) and "ACP-1000", "ACP", "ACCB-150", "SP-5", "SP-5L", "SP-10", "SP-10L", "SP-20", "SP-20L", "SCB+100", "SP-300" and "HOP" (the foregoing are high-purity graphite having a purity of at least 97.5%) which are made by Nippon Kokuen L.T.D.

Examples of commercially available artificial graphites usable in the present invention are "RA-3000", "RA-15", "RA-44", "GX-600", "G-6S", "G-3", "G-150", "G-100", "G-48", "G-30" and "G-50" which are made by Chuetsu Graphite Works Co., Ltd.; "HAG-150", "HAG-15", "HAG-5", "PAG-15", "PAG-5", "PAG-80", "PAG-60", "SGS-100", "SGS-50", "SGS-25", "SGS-15", "SGS-5", "SGS-1", "SGP-100", "SGP-50", "SGP-25", "SGP-15", "SGP-5", "SGP-1", "SGO-100", "SGO-50", "SGO-25", "SGO-15", "SGO-5", "SGO-1", "SGX-100", "SGX-50", "SGX-25", "SGX-15", "SGX-5" and "SGX-1" made by Nippon Kokuen L.T.D., as well as high-purity graphite having a purity of at least 99.9% from the same manufacturer, including "QP-2", "QP-5", "QP-10" and "QP-20".

Examples of commercially available artificial graphites produced by further processing or modifying graphite are "APO-Pi5", "AOP-B5", "AOP-A5" and "AOP-T1" which are made by Nippon Kokuen L.T.D. and have increased dispersibility into resins by surface-treating natural graphite powder with pitch, an acrylic resin or a titanate.

Examples of commercially available swollen graphites with the spacing between layers having been expanded by acid treatment are "SSLF", "SSMF", "SSFF", "SLF", "SMF", "SFF", "EMK", "ELF", "EMF", "EFF" and "CMF" which are made by Chuetsu Graphite Works Co., Ltd. and "EXP-SPM", "EXP-12M", "EXP-80M" and "EXP-SM" which are made by Nippon Kokuen L.T.D.,

Kish as described before and available from The Kansai Coke and Chemicals Co., Ltd., which does not fall into the category of the above natural and artificial graphites, is also usable as the carbon material of the present invention.

The carbon material used in the present invention may consist only of one of the above graphites or, may comprise it as a principal component while incorporating other carbon materials.

Examples of the carbon material comprising graphite as a principal component are mixtures of graphite and carbon materials such as carbon black having an Lc of not more than 8 Å and the product having an Lc of at least 150 Å and obtained by calcining a mixture of graphite and pitch (both petroleum pitch and coal pitch are usable). In the preparation of the latter, calcination at a temperature of at least 1,000°C is necessary for obtaining a calcined product having an Lc of at least 150 Å and generally calcination is conducted at a temperature of 1,000 to 3,000°C.

The addition of carbon black or pitch to graphite can give closer adhesion of the graphite to the core (conductive substrate) to be laminated. Carbon black or pitch is added to graphite in an amount of 2 to 10 parts by weight based on 100 parts by weight of the graphite. With an addition of less than 2 parts by weight the above effect of improving adhesion is not sufficiently produced, while with the addition exceeding 10 parts by weight the energy density decreases, whereby the battery capacity also decreases.

The carbon material is, in the usual manner, kneaded with a binder such as polytetrafluoroethylene or polyvinylidene fluoride and the resulting mixture is used as a material for preparing negative electrode.

It is possible to use, as the graphite used in the present invention, the afore-described swollen graphite instead of powdery graphite. In this case the swollen graphite is formed by heat treatment and pressing into graphite sheet, which is then used as a carbon material.

The electrolyte solution used in the present invention comprises mixed solvents comprising ethylene carbonate and at least one low-boiling point solvent.

Ethylene carbonate (m.p.: 39 to 40°C) which is solid at room temperature, is used after being dissolved in an ether-based low-boiling point solvent, such as 1,2-dimethoxyethane (DME), 1,2-diethoxyethane (DEE) or ethoxymethoxyethane (EME) or an ester-based low-boiling point solvent such as dimethyl carbonate (DMC) or diethyl carbonate (DEC).

Among the mixed solvents used in the present invention and comprising a ethylene carbonate and a low-boiling point solvent, those comprising a ethylene carbonate and dimethyl carbonate are excellent in, particularly, high-rate discharge characteristics thanks to high conductivity of dimethyl carbonate, while those comprising a ethylene carbonate and diethyl carbonate are particularly excellent in low-temperature discharge characteristic thanks to the low viscosity and high ion conductivity at low temperatures of diethyl carbonate.

The term "low-boiling point solvents" herein means those having a boiling point of not more than 150°C.

The use of mixed solvents containing ethylene carbonate in an amount of 20 to 80% by volume according to the invention results in a high battery capacity in high-rate discharge.

The electrolyte solution used in the present invention is prepared by dissolving, in the above-described solvent, an electrolyte solute such as LiPF₆, LiBF₄, LiClO₄, LiCF₃SO₃, LiC₄F₉SO₃, LiN(CF₃SO₂)₂ or LiAsF₆.

These solutes are dissolved in the solvent to a concentration of preferably 0.1 to 3 moles/liter, more preferably 0.5 to 1.5 moles/liter.

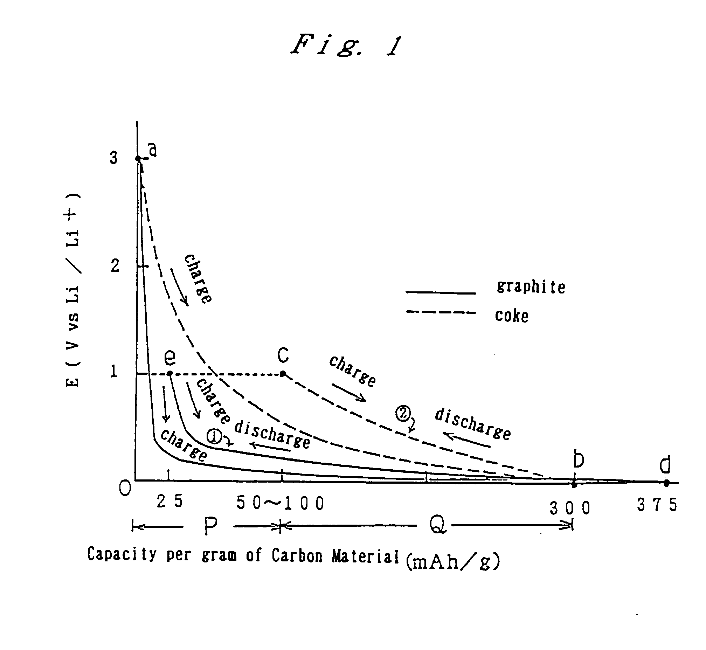

FIGURE 1 is a graph showing the charge-discharge cycle characteristics of the battery of the present invention comprising graphite as a negative electrode material and a comparison battery comprising coke as a negative electrode. The ordinate of the graph represents the potential of the negative electrode against Li/Li⁺ single electrode potential, and the abscissa represents the capacity (mAh/g) per gram of the carbon material (graphite or coke). In the FIGURE, the solid line shows the charge-discharge cycle characteristics of the battery of the present invention and the broken line that of the comparison battery, while the arrow marks indicate the direction of the negative electrode potential increasing or decreasing, during discharge or charge. The charge-discharge characteristics of the FIGURE were obtained with the batteries both utilizing an electrolyte solvent of a 1/1 by volume mixed solvent of ethylene carbonate and dimethyl carbonate.

The charge-discharge characteristic of the comparison battery are first explained with reference to FIGURE 1. The negative electrode potential, which is about 3 (V) before initial charge (point a), gets closer to the Li/Li⁺ single electrode potential (this is the base, i.e. 0 V, for the negative electrode potential values of the ordinate), as the initial charge proceeds and Li is occluded in coke, and finally reaches the point b (negative electrode potential: 0 V, capacity: about 300 mAh/g). The coke turns light brown or red at this point. The first discharge is then conducted. The negative electrode potential increases with the proceeding of the discharge and finally reaches the point c (capacity: 50 to 100 mAh/g) that shows discharge termination potential (about 1 V). In the course of the first discharge the negative electrode potential does not retrace the route followed during the initial charge but reaches the point c, thus presenting hysteresis. This is due to the fact that an amount of Li corresponding to P in the FIGURE has been caught by coke and that, in the electrode reaction during the succeeding charge-discharge cycles, only the remaining Li in an amount of Q can participate in the reaction. The negative electrode potential changes, when charge-discharge cycle is repeated thereafter, in cycles as c → b → c → b ····.

The charge-discharge cycle of the battery of the present invention is next explained. In the same manner as with the comparison battery, the negative electrode potential, which is about 3 (V) before initial charge (point a), gets closer to the Li/Li⁺ single electrode potential, as the initial charge proceeds and Li is occluded in graphite, and finally reaches the point d where the potential against the single electrode potential is 0 V (capacity: 375 mAh/g). The graphite turns gold at the point d, which, as well as X-ray diffraction, indicates that C₆Li has been formed. The first discharge is then conducted. The negative electrode potential increases with the proceeding of the discharge and finally reaches the point e (capacity: 25 mAh/g) that shows discharge termination potential (about 1 V). The negative electrode potential changes, when charge-discharge cycle is repeated thereafter, in cycles as e → d → e → d ····.

The battery characteristics of the battery of the present invention and that of comparison are compared based on the charge-discharge characteristics shown in FIGURE 1. The battery of the present invention has a large initial charge capacity per gram of graphite of about 375 mAh/g (point d) at the initial charge, while the comparison battery has a small charge capacity per gram of coke of about 300 mAh/g (point b). Furthermore, with the battery of the present invention the capacity per gram of graphite up to the discharge termination potential, 1 V, is as large as about 350 mAh/g (d - e), while that per gram of coke with the comparison battery is as small as 200 to 250 mAh/g (b - c).

This fact means that the battery of the present invention has higher charge-discharge efficiency than that of the comparison battery.

It is also noted that: while the charge-discharge curve ① of the battery of the present invention is almost flat during discharge of from the point d to e and shows a rapid increase of negative electrode potential when the discharge process comes close to the point e, the charge-discharge curve ② of the comparison battery gradually increases when proceeding from the point b to c.

This fact means that the battery of the present invention is superior to the comparison battery in the flatness of discharge voltage.

That the battery of the present invention has higher charge-discharge efficiency and flatter discharge voltage than those of the comparison battery further means that the battery of the present invention has higher discharge capacity than the comparison battery.

Other features of the invention will become apparent in the course of the following description of exemplary embodiments which are given for illustration of the invention and are not intended to be limiting thereof.

### EXAMPLES

### Example 1

### (Preparation of positive electrode)

Cobalt carbonate and lithium carbonate were mixed in a atom ratio of Co:Li of 1:1, and the mixture was heat treated at 900°C in the air for 20 hours to give LiCoO₂.

The LiCoO₂ thus obtained as a positive electrode material was mixed with a conductor of acetylene black and a binder of fluororesin dispersion in a ratio by weight of 90:6:4 to give a material for preparing positive electrode. The material was rolled onto an aluminum foil that served as a current collector and heat treated under vacuum at a temperature of 250°C for 2 hours, to give a positive electrode.

### (Preparation of negative electrode)

Materials for preparing negative electrode were obtained by mixing each of China natural graphite, artificial graphite and Lonza graphite, all with a size of 400 mesh pass, with a binder of fluororesin dispersion in a ratio by weight of 95:5. These materials were each rolled on a current collector of an aluminum foil and heat treated under vacuum at 250°C for 2 hours, to give negative electrodes each having corresponding one of the above carbon materials. The graphite used for negative electrode preferably has a particle size of 400 mesh pass, more preferably 2 to 14 µm.

### (Preparation of electrolyte solution)

An electrolyte solution was prepared by dissolving LiPF₆ in a 1/1 by volume mixed solvent of ethylene carbonate and dimethyl carbonate to a concentration of 1 mole/liter.

### (Preparation of batteries BA 1 through 3)

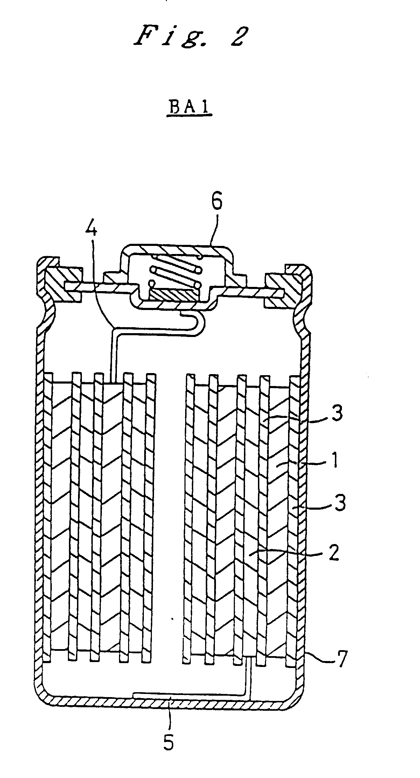

Cylindrical nonaqueous electrolyte solution secondary batteries (battery size: 14.2 mm diameter, 5-0.0 mm height) were prepared from the above positive electrode, negative electrode and electrolyte. BA1, BA2 and BA3 denote those utilizing, as a carbon material, natural graphite, artificial graphite and Lonza graphite, respectively. An ion-permeable polypropylene sheet (CELGARD, made by Daicel Co.) was used as a separator
FIGURE 2 is a sectional view of the thus prepared battery BA1 (or 2, or 3), which comprises a positive electrode 1, a negative electrode 2, a separator 3 interposed between and separating these two electrodes, a positive electrode lead 4, a negative electrode lead 5, a positive electrode external terminal 6, a negative electrode can 7 and other parts. The positive electrode 1 and the negative electrode 2 are housed in the negative electrode can 7, while being spirally wound up with the separator 3 inter-posed between them, the separator containing an electrolyte solution injected thereinto. The positive electrode 1 is connected via the positive electrode lead 4 to the positive electrode external terminal 6 and the negative electrode 2 is connected via the negative electrode lead 5 to the negative electrode can 7. The battery is thus capable of permitting the chemical energy generated inside it to be taken out as an electrical energy.

### Comparison Example 1

Example 1 was repeated except for using coke as a negative electrode material, to prepare a comparison battery BC1.

### Charge-discharge characteristics of the batteries

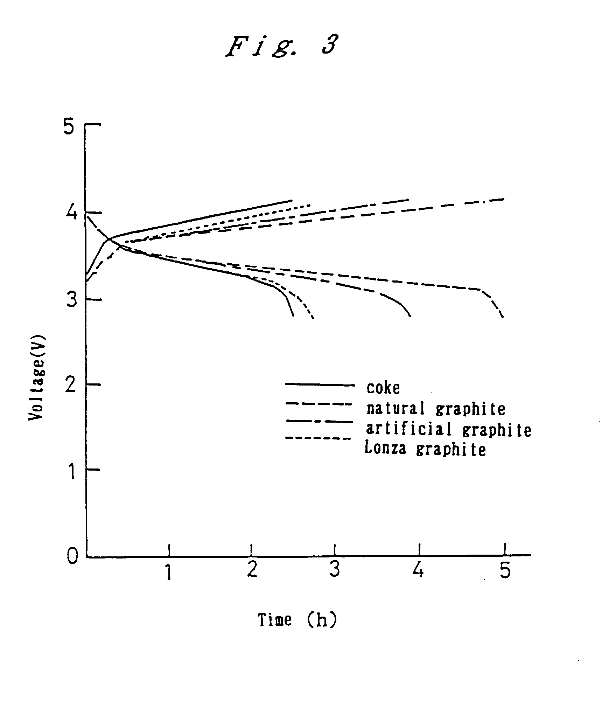

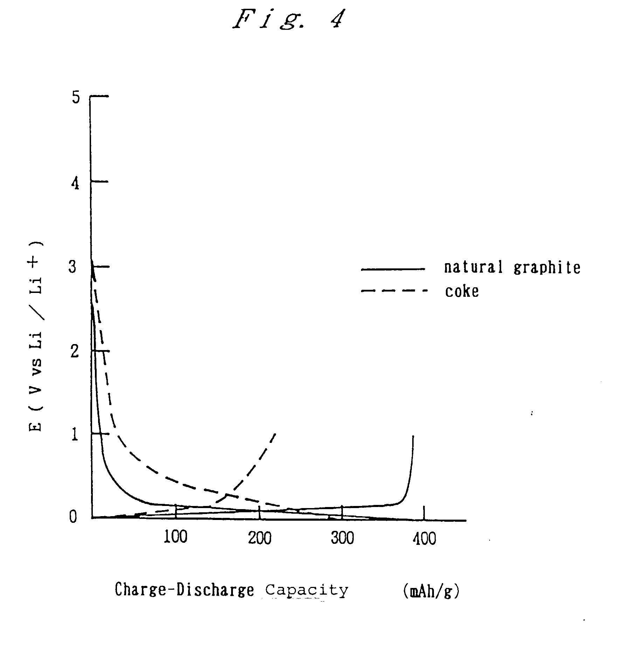

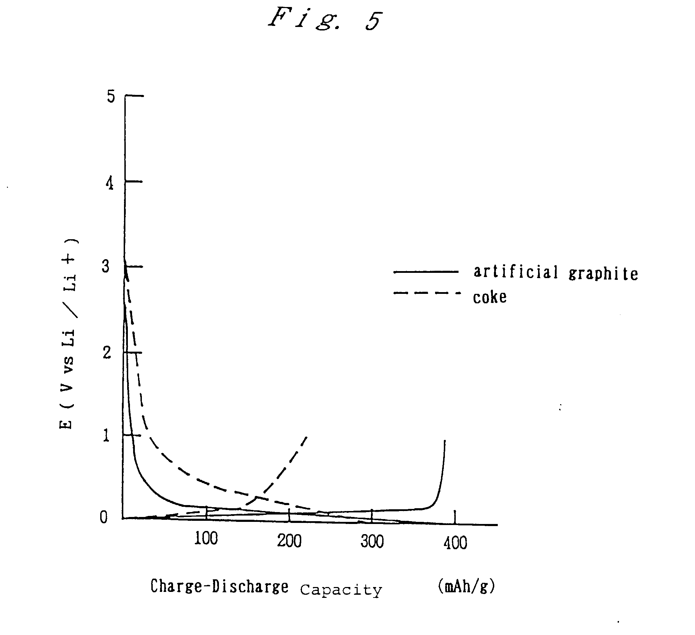

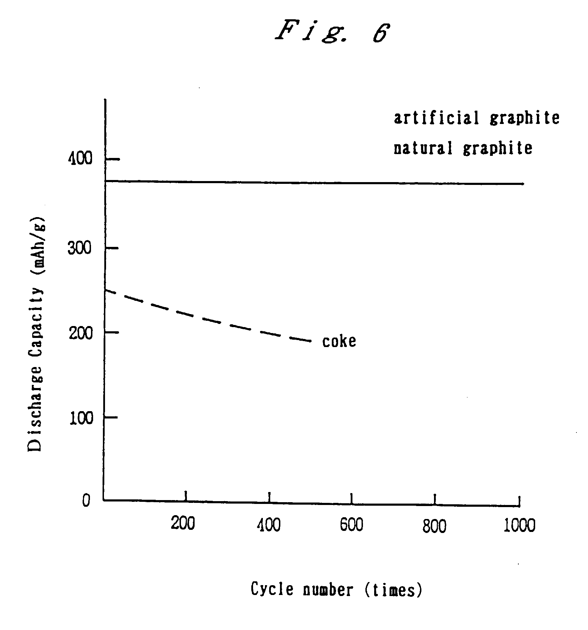

FIGURE 3 is a graph showing the charge-discharge characteristics at 250 mA (constant-current discharge) from the second cycle on of the batteries BA1 through BA3 of the present invention and the comparison battery BC1, where the ordinate represents the voltage (V) and the abscissa represents the time (h). FIGURES 4 and 5 each shows the charge-discharge characteristics of the battery BA1 or BA2 as compared with that of the comparison battery BC1, where the ordinate represents the negative electrode potential (V) against Li/Li⁺ single electrode potential and the abscissa represents the charge-discharge capacity (mAh/g). It is understood from these FIGURES that the batteries BA1 through BA3 of the present invention are superior to the comparison battery BC1 in charge-discharge characteristics. FIGURE 6 is a graph showing the cycle characteristics of the batteries BA1 and BA2 of the present invention and the comparison battery BC1, with the ordinate representing the discharge capacity (mAh/g) and the abscissa the cycle number. As seen from the FIGURE, the batteries BA1 and BA2 of the present invention develop better cycle characteristics than the comparison battery BC1. These batteries were also, after being charged, kept at a room temperature for 1 month and tested for storage capability. Then, the self-discharge rate was 2 to 5%/month for the batteries BA1 through BA3 of the present invention and 15%/month for the comparison battery BC1.

### Example 2

Example 1 was repeated except for using, instead of the China natural graphite, a calcined product having a crystallite size, Lc, in the c-axis direction in X-ray diffraction pattern of 150 Å and prepared by calcining at a temperature of 1,000°C a mixture of 100 parts by weight of the natural graphite and 5 parts by weight of pitch, to obtain a battery, BA4, according to the present invention. The X-ray diffraction method was conducted under the following measuring conditions (hereinafter the same will apply).
- Radiation source:: CuKα
- Slit conditions:: divergence slit 1°, scattering slit 1° and receiving slit 0.3 mm.
- Gonioradius:: 180 mm
Graphite curved crystalline monochromator.

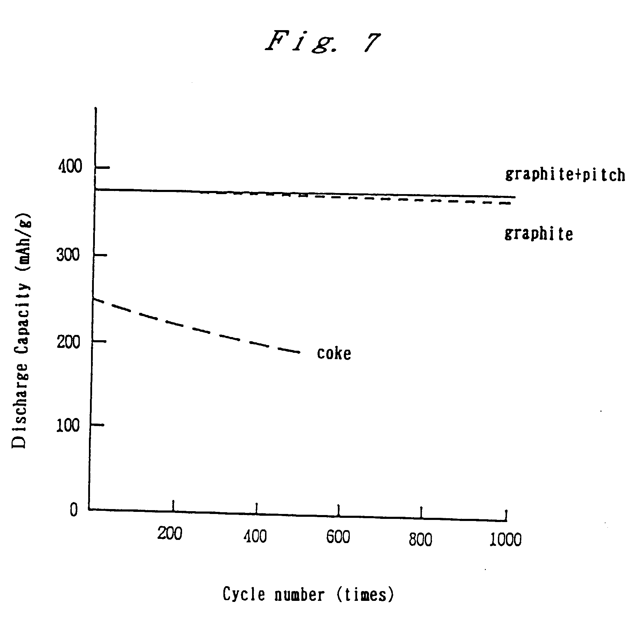

FIGURE 7 is a graph showing the cycle characteristics of the thus prepared battery BA4, where the ordinate represents the discharge capacity of battery (mAh/g) and the abscissa the cycle number. FIGURE 7 also shows for comparison purpose the cycle characteristics of the battery BA1 utilizing as a carbon material graphite only and the battery BC1 utilizing coke.

As seen from the FIGURE, the battery BA4 develops, thanks to little dropping off of the carbon material from the electrode, better cycle characteristics than that utilizing graphite only, to say nothing of that utilizing coke.

### Example 3

Example 1 was repeated except for using, instead of the China natural graphite, a mixture of 100 parts by weight of the natural graphite and 5 parts by weight of carbon black having an Lc of 8 Å, to obtain a battery, BA5, according to the present invention.

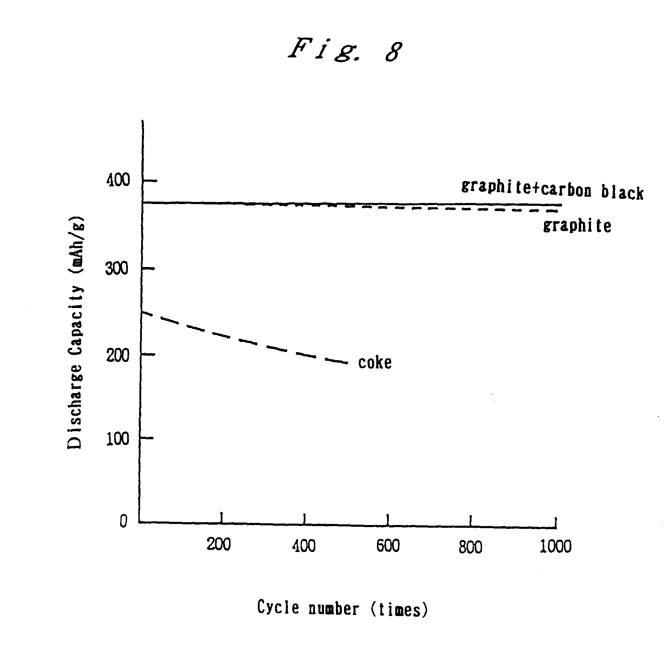

FIGURE 8 is a graph showing the cycle characteristics of the thus prepared battery BA5, where the ordinate represents the discharge capacity of battery (mAh/g) and the abscissa the cycle number. FIGURE 8 also shows for comparison purpose the cycle characteristics of the battery BA1 utilizing as a carbon material graphite only and the battery BC1 utilizing coke.

As seen from the FIGURE, the battery BA5 develops, thanks to little dropping off of the carbon material from the electrode, better cycle characteristics than that utilizing graphite only, to say nothing of that utilizing coke.

### Example 4

Example 1 was repeated except for using, instead of the 1/1 by volume mixed solvent of ethylene carbonate (EC) and dimethyl carbonate (DMC) as an electrolyte solvent, a 1/1 by volume mixed solvent of ethylene carbonate and diethyl carbonate (DEC) , a 1/1 by volume mixed solvent of ethylene carbonate and dipropyl carbonate (DPC) and 1,3-dioxolane (1,3-DOL), respectively, to prepare a battery BA6 according to the present invention, a comparison battery BC2 and a conventional battery.

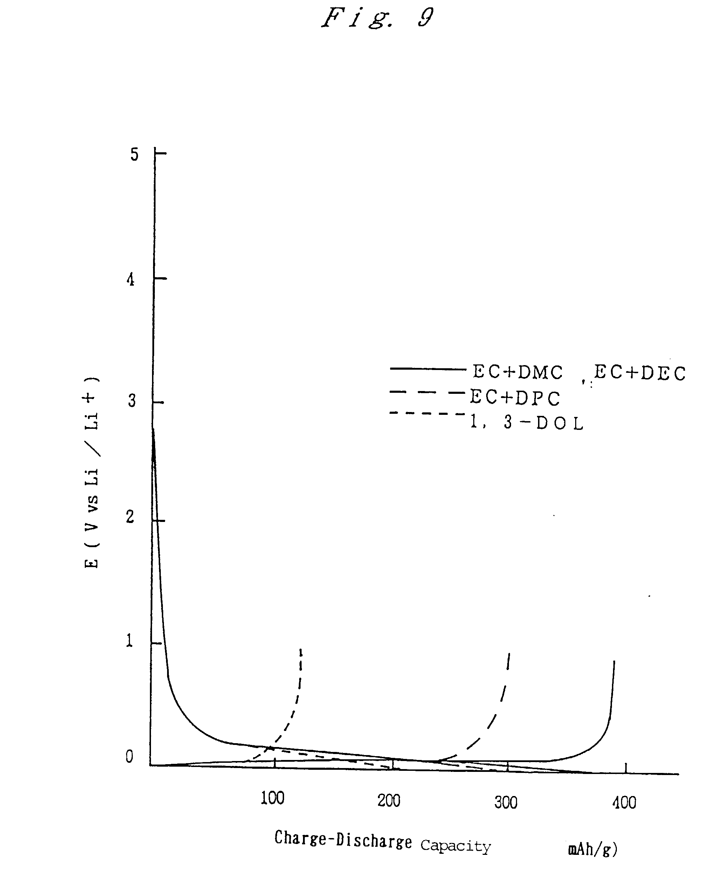

FIGURE 9 is a graph showing the charge-discharge characteristics of these batteries, with the ordinate representing the negative electrode potential (V) and the abscissa representing the charge-discharge capacity.

As seen from the FIGURE, the battery BA6 develops, like that BA1, better charge-discharge characteristics than the comparison battery BC2 and the conventional battery.

### Example 5

Negative electrodes were prepared from 13 types cf carbon materials having different d-values (d₀₀₂) of the lattice plane (002) in X-ray diffraction pattern. Using the 13 negative electrodes thus prepared 13 batteries were obtained in the same manner as in Example 1.

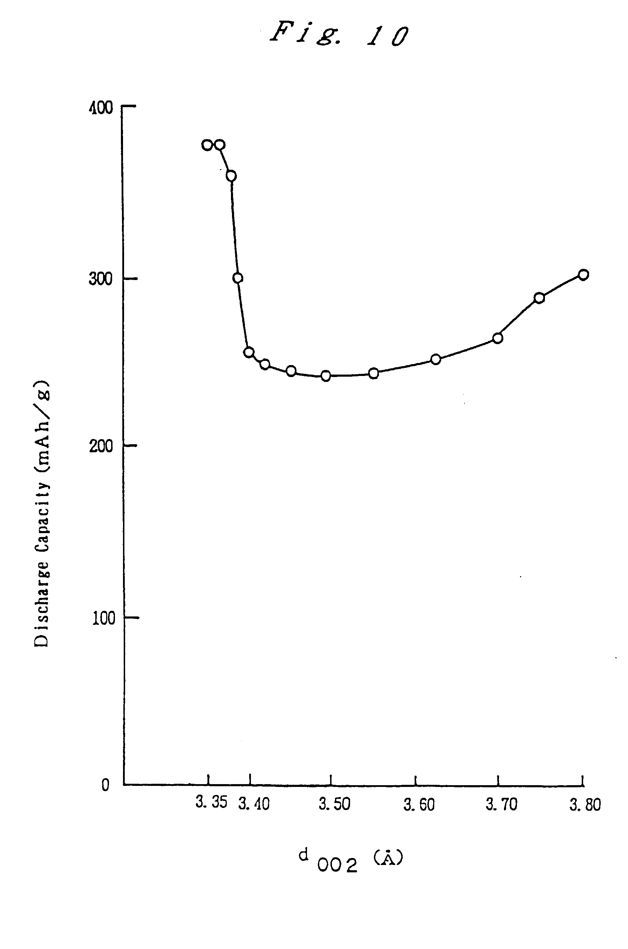

FIGURE 10 is a graph showing the relationship between the d₀₀₂ value of a carbon material and the discharge capacity of the battery utilizing it, with the ordinate representing the discharge capacity (mAh/g) of the battery and the abscissa the d₀₀₂ value (Å) of the carbon material used.

As seen from the FIGURE, batteries utilizing a graphite having a d₀₀₂ of 3.35 to 3.40 have large discharge capacities.

### Example 6

Negative electrodes were prepared from 12 types of carbon materials having different true densities. Using the 12 negative electrodes thus prepared 12 batteries were obtained in the same manner as in Example 1.

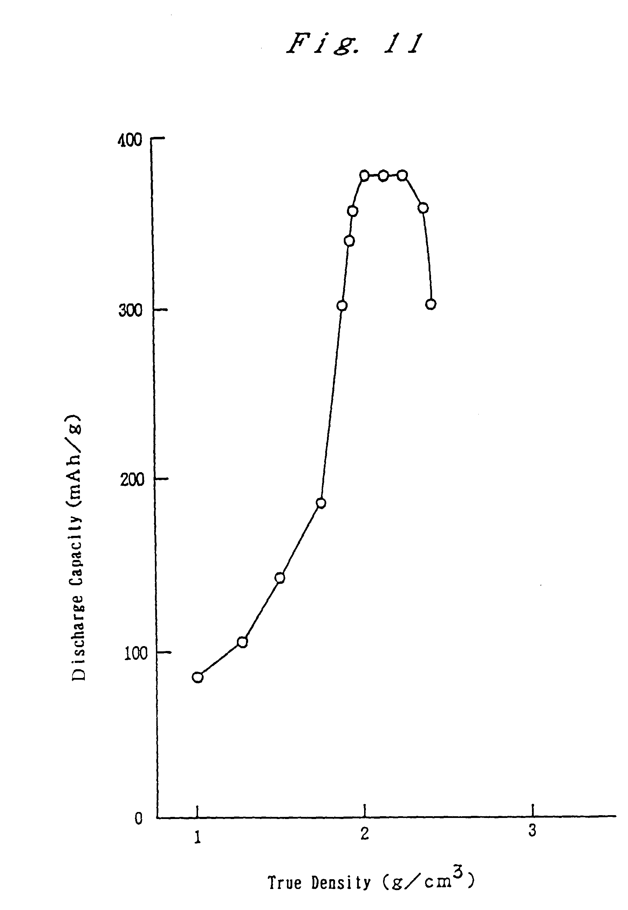

FIGURE 11 is a graph showing the relationship between the true density of a carbon material and the discharge capacity of the battery utilizing it, with the ordinate representing the discharge capacity (mAh/g) of the battery and the abscissa the true density (g/cm³) of the carbon material used.

As seen from the FIGURE, batteries utilizing a graphite having a true density of 1.9 to 2.3 have large discharge capacities.

### Example 7

Negative electrodes were prepared from 9 types of carbon materials having different average particle diameter. Using the 9 negative electrodes thus prepared 9 batteries were obtained in the same manner as in Example 1.

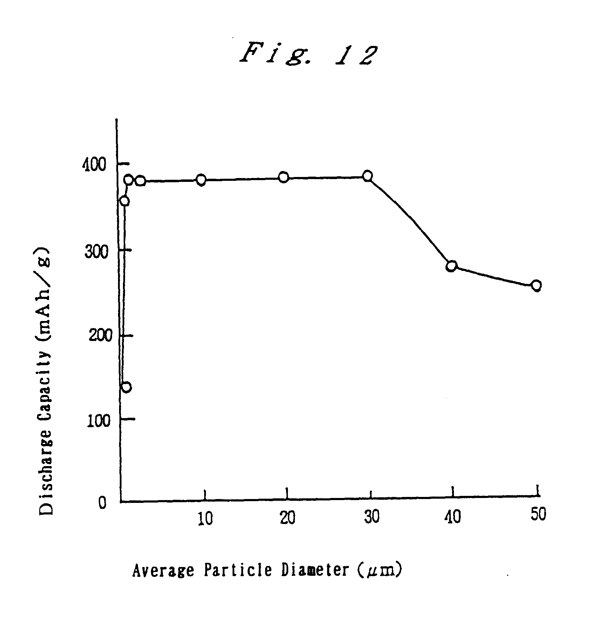

FIGURE 12 is a graph showing the relationship between the average particle diameter of a carbon material and the discharge capacity of the battery utilizing it, with the ordinate representing the discharge capacity (mAh/g) of the battery and the abscissa the average particle diameter (µm) of the carbon material used.

As seen from the FIGURE, batteries utilizing a graphite having an average particle diameter of 1 to 30 µm have large discharge capacities.

### Example 8

Negative electrodes were prepared from 13 types of carbon materials having different specific surface areas. Using the 13 negative electrodes thus prepared 13 batteries were obtained in the same manner as in Example 1.

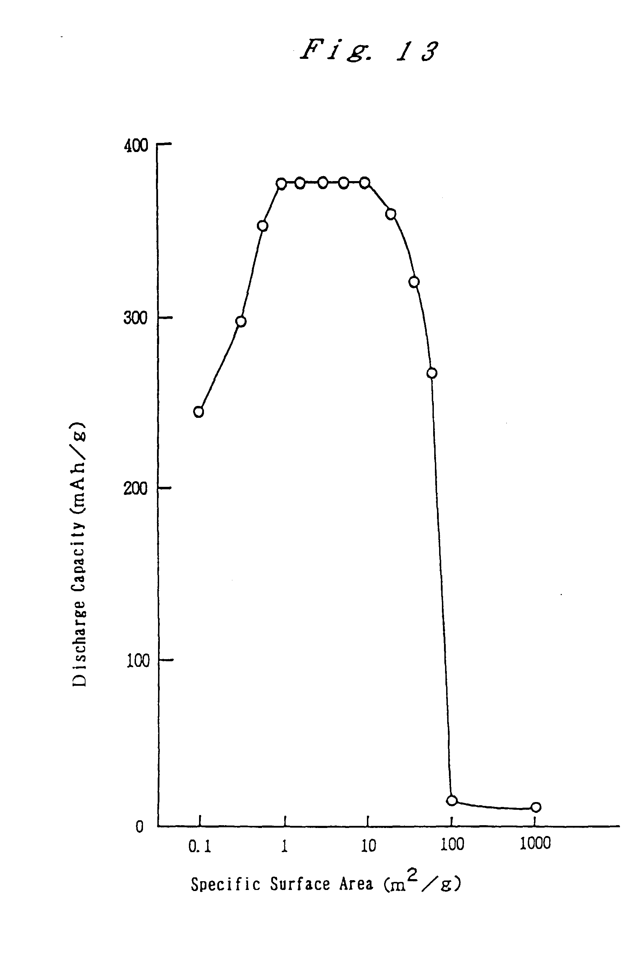

FIGURE 13 is a graph showing the relationship between the specific surface area of a carbon material and the discharge capacity of the battery utilizing it, with the ordinate representing the discharge capacity (mAh/g) of the battery and the abscissa the specific surface area (m²/g) of the carbon material used.

As seen from the FIGURE, batteries utilizing a graphite having a specific surface area of 0.5 to 50 m²/g have large discharge capacities.

### Example 9

Negative electrodes were prepared from 11 types of carbon materials having different Lc's. Using the 11 negative electrodes thus prepared 11 batteries were obtained in the same manner as in Example 1.

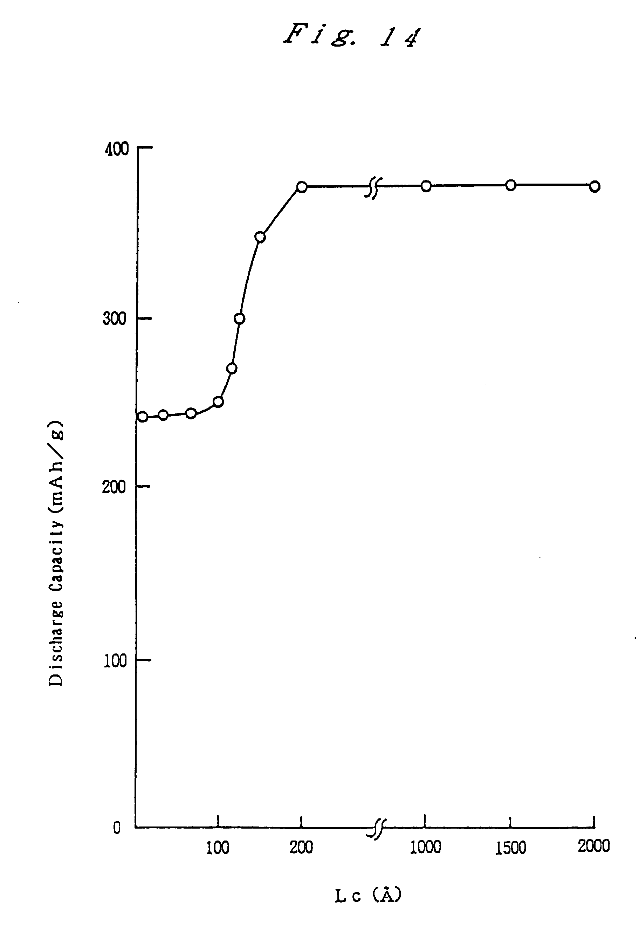

FIGURE 14 is a graph showing the relationship between the Lc of a carbon material and the discharge capacity of the battery utilizing it, with the ordinate representing the discharge capacity (mAh/g) of the battery and the abscissa the Lc (Å) of the carbon material used.

As seen from the FIGURE, batteries utilizing a graphite having an Lc of at least 150 Å have large discharge capacities.

### Example 10

Example 1 was repeated except for using electrolyte solutions of a 1 mole/liter LiPF₆ solution in each of mixed solvents as shown in Table 2 to prepare 3 types of batteries according to the present invention. The batteries thus prepared were discharged at 100 mA and then tested for their graphite characteristics [capacity per unit weight (mAh/g) and initial charge-discharge efficiency (%)], battery characteristics [battery capacity (mAh), self-discharge rate (%/month), cycle life (times) and charge-discharge efficiency (%)]. The results are also shown in Table 2.

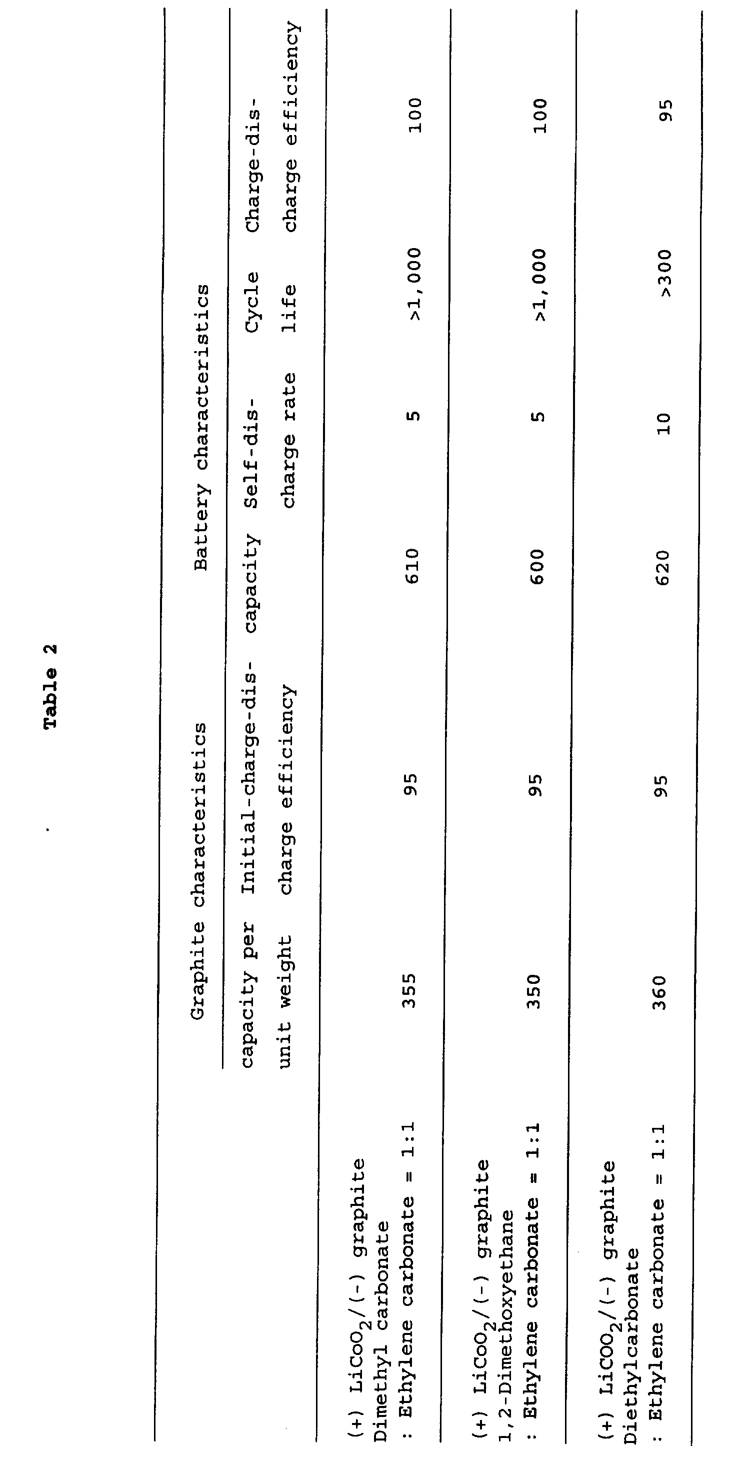

### Example 11

Example 1 was repeated except for using electrolyte solutions of a 1 mole/liter LiPF₆ solution in each of mixed solvents as shown in Table 3, to prepare 5 types of batteries according to the present invention. The batteries thus prepared were discharged at 1 A and then tested for the same items as those in Example 10. The results are also shown in Table 3.

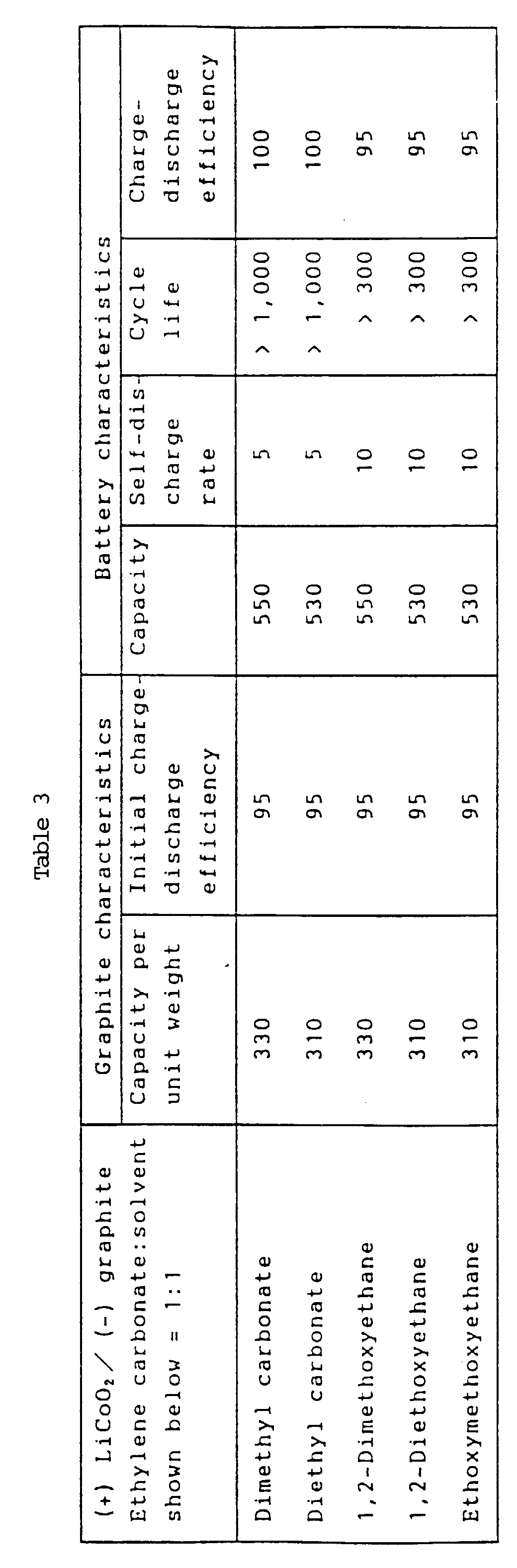

### Example 12

Example 1 was repeated except for using, instead of LiPF₆, each of electrolyte solutes as shown in Table 4, to prepare 6 types of batteries according to the present invention. The batteries thus prepared were discharged at 100 mA and then tested for the same items as those in Example 10. The results are also shown in Table 4.

Tables 2 through 4 shows that the batteries of the present invention develop better battery characteristics over all the items tested than those of the conventional battery.

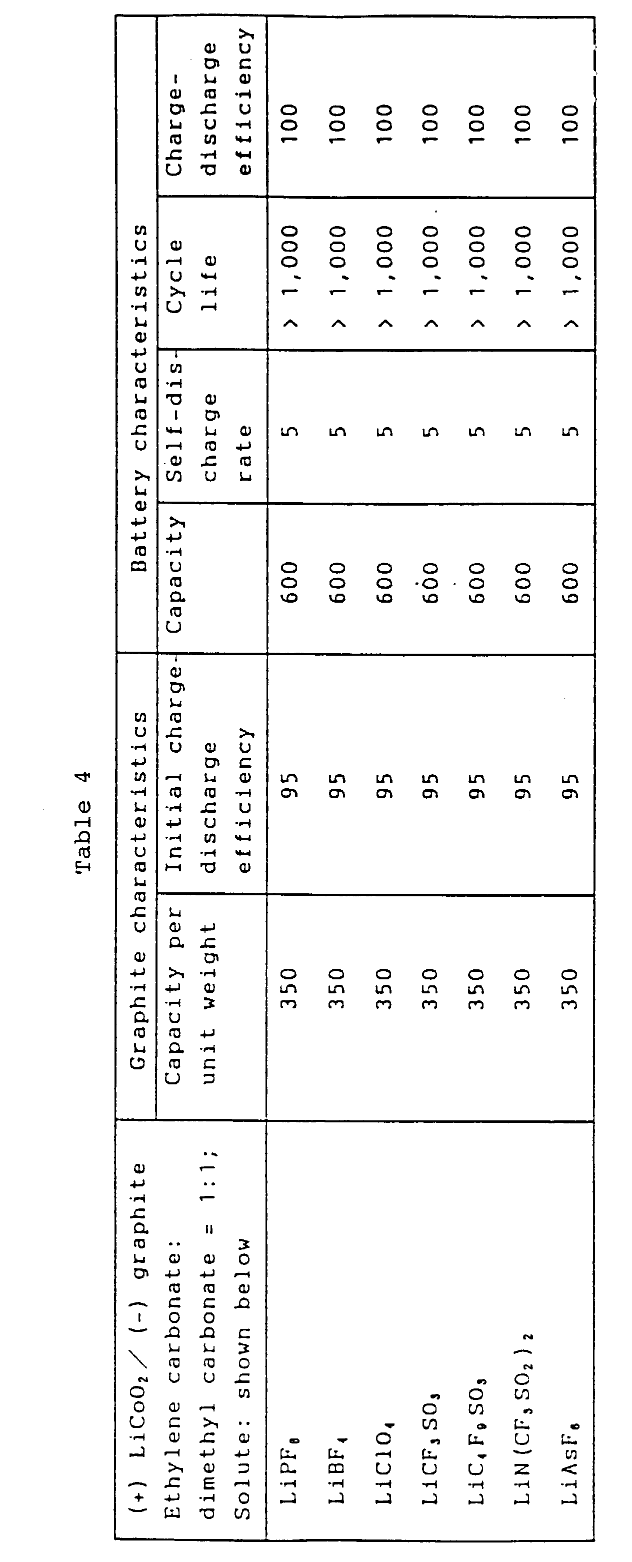

### Example 13

Example 1 was repeated except for using mixed solvents of ethylene carbonate and dimethyl carbonate in various mixing ratios by volume (% by volume) and using LiNiO₂ instead of LiCoO₂ for the positive electrode, to prepare 11 batteries. The batteries thus prepared were discharged at 1 A and then tested for the relationship between the battery capacity and the mixing ratio by volume.

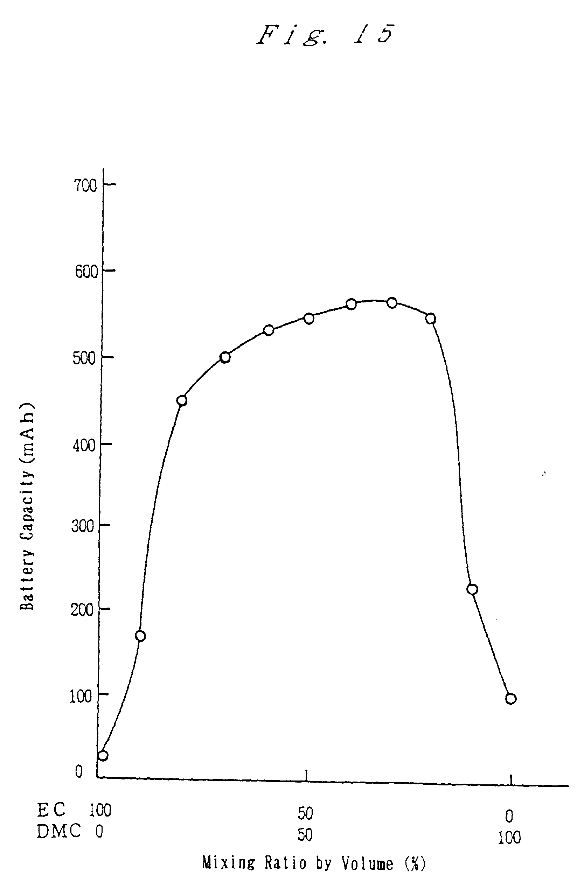

FIGURE 15 is a graph with the ordinate representing the battery capacity (mAh) and the abscissa the mixing ratio by volume (% by volume). The FIGURE shows that, with discharge at 1 A it is desirable to use the solvent containing 20 to 80% by volume of ethylene carbonate.

### Example 14

Example 1 was repeated except for changing the mixing ratio by volume (% by volume) of ethylene carbonate and diethyl carbonate, to prepare 11 batteries. The batteries thus prepared were discharged at 1 A and then tested for the relationship between the battery capacity and the mixing ratio by volume.

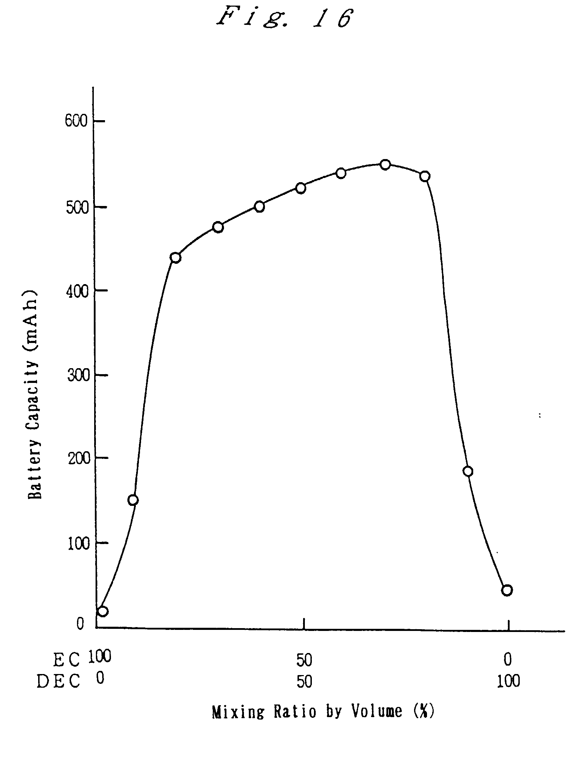

FIGURE 16 is a graph with the ordinate representing the battery capacity (mAh) and the abscissa the mixing ratio by volume (% by volume). The FIGURE shows that, with discharge at 1 A, it is desirable to use the solvent containing 2C to 80% by volume of ethylene carbonate.

### Example 15

Example 1 was repeated except for using mixed solvents of ethylene carbonate, dimethyl carbonate and diethyl carbonate in various mixing ratios (% by volume) with the latter two being always mixed in the same amounts and using LiMn₂O₄ instead of LiCoO₂ for the positive electrode, to prepare 11 batteries. The batteries thus prepared were discharged at 1 A and then tested for the relationship between the battery capacity and the mixing ratio by volume.

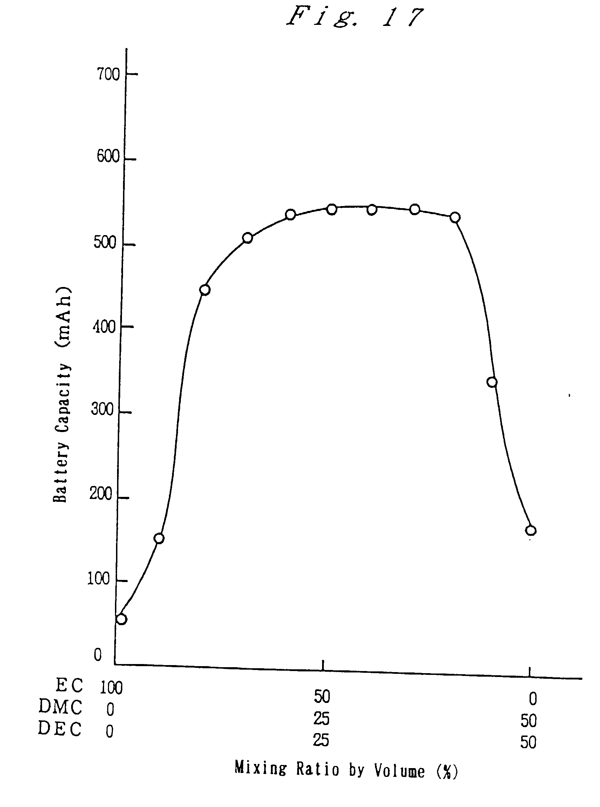

FIGURE 17 is a graph with the ordinate representing the battery capacity (mAh) and the abscissa the mixing ratio by volume (% by volume). The FIGURE shows that, with discharge at 1 A, it is desirable to use the solvent containing 20 to 80% by volume of ethylene carbonate.

### Example 16

By the following process 1 or process 2, 16 types of intercalation products comprising a metal oxide inserted between layers of graphite were prepared.

In glacial acetic acid, 200 g of one of various metal oxides as shown in Table 5 and KMnO₄ (catalyst) were stirred, and to the mixture 10 g of graphite powder (trade name: NG-7) was added. The resulting mixture was stirred at 45°C for 3 days.

The mixture was then filtered to collect solid matter, which was then washed with acetic acid and dried under reduced pressure at 80°C for 2 days. The thus dried matter was separated by centrifugation into metal oxide residue and graphite powder.

The process up to this stage is named "process 1".

The graphite powder thus obtained was further subjected to negative electrode reduction with a constant current of 3 mA/cm² in an electrolyte solution of 1 mole/liter LiPF, in a 1/1 by volume mixed solvent of ethylene carbonate and dimethyl carbonate, to permit Li to be inserted thereinto.

The process up to this stage is named "process 2".

Example 1 was repeated except for using instead of LiCoO₂ the positive electrode materials prepared by the above process 1 or process 2, to prepare 16 types of batteries as shown in Table 5.

The batteries thus prepared were discharged at 100 mA and tested for positive electrode capacity (mAh/g), battery capacity (mAh), self-discharge rate (%/month), cycle life (times) and charge-discharge efficiency. The results are shown in Table 5, where the numerals 1 and 2 in the column of "Process" of the table correspond to the above process 1 and process 2, respectively.

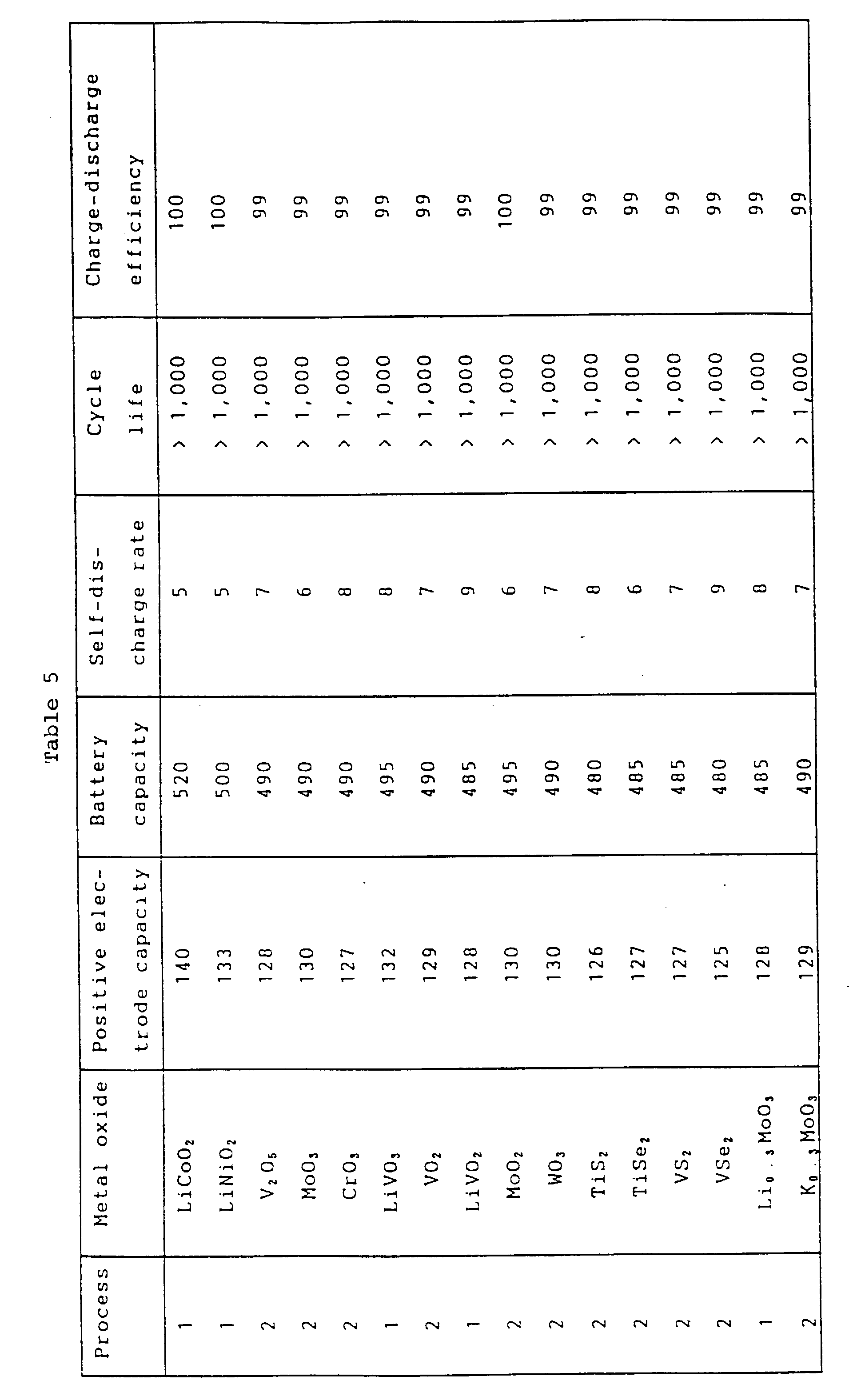

### Example 17

By one of the following processes 1 through 3, 24 types of intercalation products comprising anion inserted into graphite were prepared.

### (Process 1)

In 1 liter of a 1 M aqueous acid solution containing anion, 6 g of KMnO₄ was placed and the mixture was stirred. Then, 10 g of graphite powder "NG-7" (trade name) was added and the resulting mixture was stirred at 60°C for 3 days.

The mixture was filtered to collect solid matter, which was washed with water and then dried at 60°C for 3 days.

### (Process 2; preparation of TIF₄ and VF₅).

A chamber was charged with TIF₄ or VF₅, and then filled with fluorine gas. In the chamber 10 g of graphite powder "NG-7" (trade name) was placed. With the use of TIF₄ the graphite powder was exposed at 160°C and with the use of VF₅ it was exposed at 180°C, for 3 days.

### (Process 3)

Graphite positive electrode was subjected to positive electrode oxidation in an electrolyte solution of a lithium salt containing an anion in a 1/1 by volume mixed solvent of ethylene carbonate and dimethyl carbonate, to permit the anion to be inserted to the graphite.

The obtained material was then washed with the above mixed solvent and dried at 60°C for 3 days.

Positive electrode materials prepared by one of the above processes 1 through 3 were used instead of LiCoO₂, while a negative electrode utilizing "NG-7" (trade name) as graphite was subjected to negative electrode reduction in an electrolyte solution [1 mole/liter LiPF₆ solution in a 1/1 by volume mixed solution of ethylene carbonate and dimethyl carbonate, to form C₆Li.

Batteries as shown in Table 6 were thus prepared. They were discharged at 100 mA and tested for the same items as in Example 16. The results are shown in Table 6, where the numerals 1 through 3 in the column "Process" correspond to the above described processes 1 through 3, respectively.

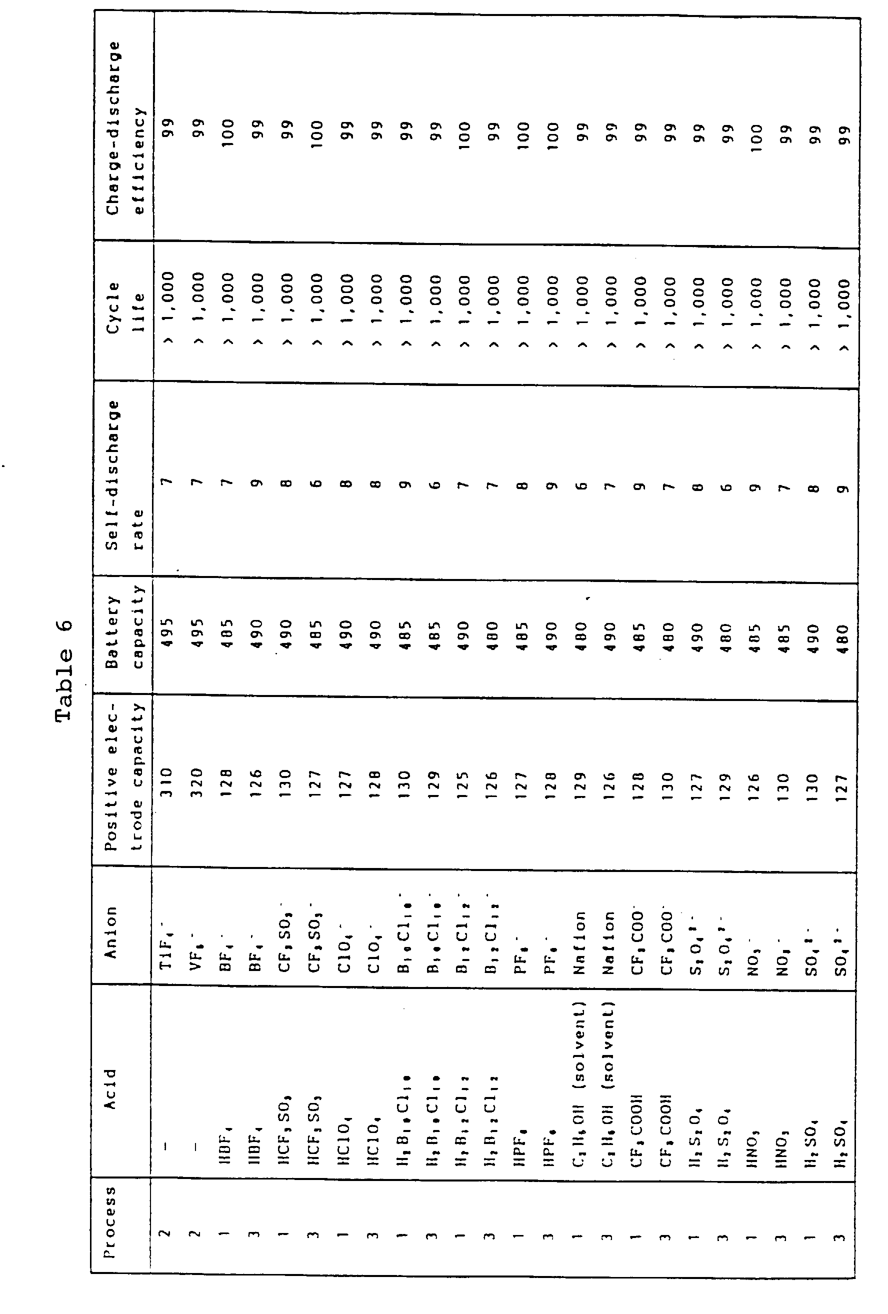

### Example 18

By the following process 1 (liquid phase process) or process 2 (gas phase process), 10 types of intercalation products comprising halogen inserted into graphite were prepared.

### (Process 1)

In 1 liter of a fluid halogen 10 g of graphite powder was immersed for 24 hours, and thereafter unreacted halogen was evaporated off under a pressure near the saturated vapor pressure of the inserted halogen.

### (Process 2)

Graphite powder was placed in a halogen gas.

After inserting halogen by process 1 or process 2, negative electrode reduction was conducted at a constant current of 3 mA/cm² to insert lithium.

Example 1 was repeated except for using as a positive electrode material each of the thus prepared 10 intercalation products, to obtain 10 batteries as shown in Table 7. The batteries were then discharged at 100 mA and tested for the same items as in Example 16. The results are shown in Table 7, where the numerals 1 and 2 in the column "Process" correspond to the above process 1 and process 2, respectively.

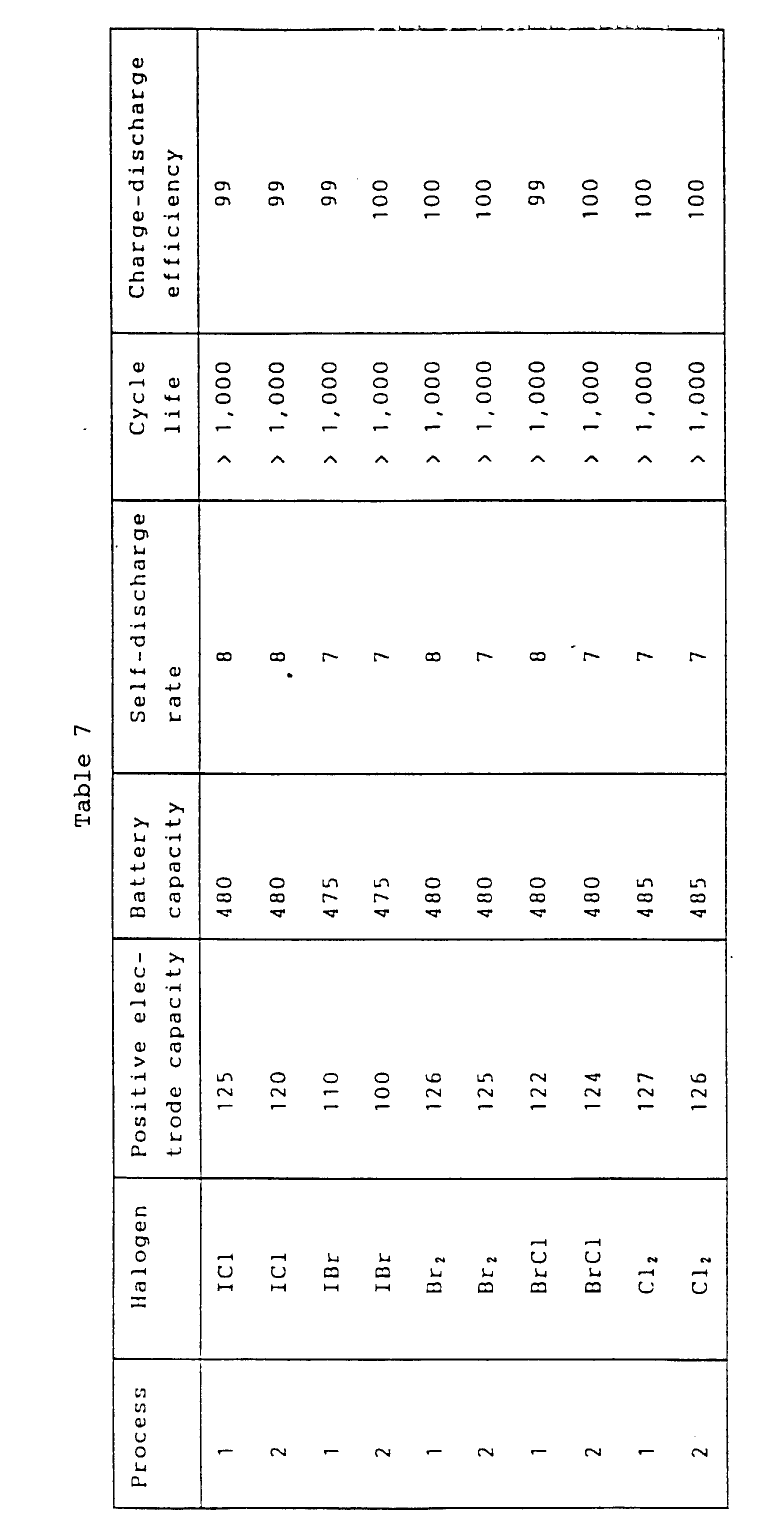

### Example 19

To 10 g of graphite powder (trade name: "NG-7") metal chloride vapors were contacted to prepare 9 types of intercalation products comprising a metal chloride inserted into graphite.

These intercalation products were subjected to negative electrode reduction at a constant current of 3 mA/cm², to permit lithium to be inserted thereinto.

Example 1 was repeated except for using as a positive electrode material each of the thus obtained 9 intercalation products, to prepare 9 types of batteries as shown in Table 8. These batteries were discharged at 100 mA and then tested for the same items as in Example 16. The results are shown in Table 8.

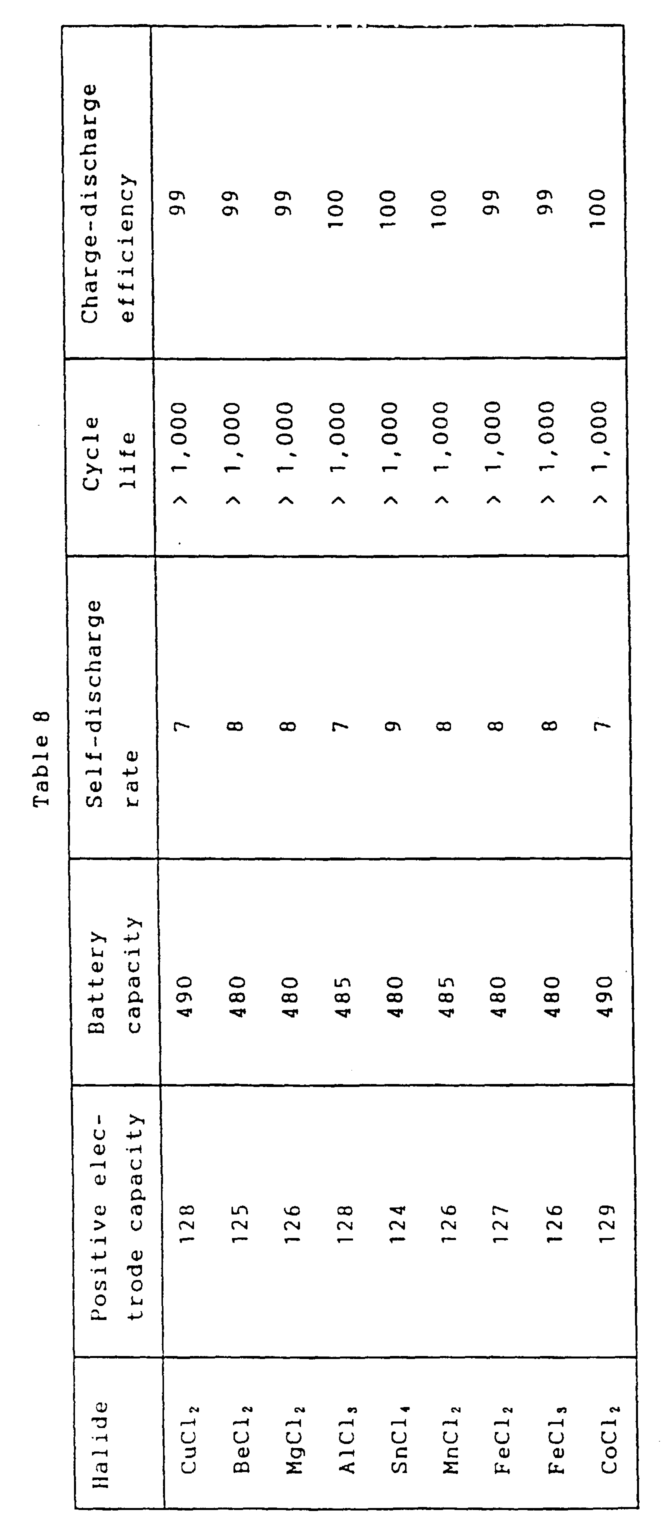

## Claims

1. A lithium secondary battery comprising:
a positive electrode principally comprising a compound capable of occluding and discharging lithium,
a negative electrode principally comprising a carbon material which comprises a graphite as an only or principal component having a) a d-value of the lattice plane (002) of 0.335 nm (3.35 Å) to 0.34 nm (3.40 Å) and b) a crystallite size in the c-axis direction of at least 15 nm (150 Å),
a separator placed between said positive electrode and said negative electrode; and
an electrolyte solution of an electrolyte solute dissolved in a mixed solvent consisting essentially of 20 to 80% by volume of ethylene carbonate and 80 to 20% by volume of at least one low-boiling point solvent selected from the group consisting of dimethyl carbonate, diethyl carbonate, 1,2-dimethoxyethane, 1,2-diethoxyethane and ethoxymethoxyethane.

2. A lithium secondary battery according to claim 1, wherein said mixed solvent consists essentially of ethylene carbonate and dimethyl carbonate.

3. A lithium secondary battery according to claim 1, wherein said mixed solvent consists essentially of ethylene carbonate and diethyl carbonate.

4. A lithium secondary battery according to claim 1, wherein said mixed solvent consists essentially of ethylene carbonate, dimethyl carbonate and diethyl carbonate.

5. A lithium secondary battery according to any of claims 1 to 4, wherein said graphite has an average particle diameter of 1 to 30 *µ*m.

6. A lithium secondary battery according to any of claims 1 to 5, wherein said graphite has a specific surface area of 0.5 to 50 m²/g.

7. A lithium secondary battery according to any of claims 1 to 6, wherein said graphite has a true density of 1.9 to 2.3 g/cm³.

8. A lithium secondary battery according to any of claims 1 to 7, wherein said carbon material principally comprising a graphite is a mixture of the graphite and a carbon material having a crystallite size in the c-axis direction of not more than 0.8 nm (8 Å).

9. A lithium secondary battery according to any of claims 1 to 8, wherein said carbon material principally comprising a graphite is obtained by calcining a mixture of the graphite and pitch and has a crystallite size in the c-axis direction of at least 15 nm (150 Å).

10. A lithium secondary battery according to any of claims 1 to 9, wherein said compound capable of occluding and discharging lithium is represented by the formula LiₓMO₂ or Li_{y}M₂O₄, wherein M is a transition element, and 0 ≤ x ≤ 1 and O ≤ y ≤ 2.

11. A lithium secondary battery according to any of claims 1 to 9, wherein said compound capable of occluding and discharging lithium is a metal oxide intercalated graphite, anion intercalated graphite or halogen or halide intercalated graphite.

12. A lithium secondary battery according to any of claims 1 to 9, wherein said compound capable of occluding and discharging lithium is a conductive polymer or a conductive polymer containing a dopant.

13. A lithium secondary battery according to any of claims 1 to 12, wherein said electrolyte solute is selected from the group consisting of LiPF6, LiBF₄, LiClO₄, LiCF₃SO₃, LiC₄F₉SO₃, LiN(CF₃SO₂)₂ and LiAsF₆.

## Patentansprüche

1. Lithium-Sekundärbatterie, welche aufweist :
eine positive Elektrode, die hauptsächlich eine Verbindung aufweist, die Lithium einschließen und abscheiden kann,
eine negative Elektrode, die hauptsächlich ein Kohlenstoffmaterial mit einem Graphit als einzigem oder als Hauptbestandteil aufweist, der a) einen d-Wert der Gitterebene (002) von 0,335 nm (3,35 Å) bis 0,34 nm (3,40 Å) und b) ein Kristallitgröße in Richtung der c-Achse von mindestens 15 nm (150 Å) aufweist;
ein zwischen der positiven Elektrode und der negativen Elektrode angeordnetes Trennelement; und
eine Elektrolytlösung eines zu lösenden Elektrolyten, aufgelöst in einem Mischlösungsmittel, das im wesentlichen aus 20 bis 80 Vol.-% Ethylencarbonat und 80 bis 20 Vol.-% mindestens eines niedrigsiedenden Lösungsmittels besteht, das aus der Gruppe ausgewählt ist, die aus Dimethylcarbonat, Diethylcarbonat, 1,2-Dimethoxyethan, 1,2-Diethoxyethan und Ethoxymethoxyethan besteht.

2. Lithium-Sekundärbatterie nach Anspruch 1, wobei das Mischlösungsmittel im wesentlichen aus Ethylencarbonat und Dimethylcarbonat besteht.

3. Lithium-Sekundärbatterie nach Anspruch 1, wobei das Mischlösungsmittel im wesentlichen aus Ethylencarbonat und Diethylcarbonat besteht.

4. Lithium-Sekundärbatterie nach Anspruch 1, wobei das Mischlösungsmittel im wesentlichen aus Ethylencarbonat, Dimethylcarbonat und Diethylcarbonat besteht.

5. Lithium-Sekundärbatterie nach einem der Ansprüche 1 bis 4, wobei der Graphit einen mittleren Teilchendurchmesser von 1 bis 30 µm aufweist.

6. Lithium-Sekundärbatterie nach einem der Ansprüche 1 bis 5, wobei der Graphit eine spezifische Oberfläche von 0,5 bis 50 m²/g aufweist.

7. Lithium-Sekundärbatterie nach einem der Ansprüche 1 bis 6, wobei der Graphit eine wahre Dichte von 1,9 bis 2,3 g/cm³ aufweist.

8. Lithium-Sekundärbatterie nach einem der Ansprüche 1 bis 7, wobei das Kohlenstoffmaterial hauptsätlich einen Graphit aufweist, der ein Gemisch aus dem Graphit und einem Kohlenstoffmaterial mit einer Kristallitgröße in Richtung der c-Achse von nicht mehr als 0,8 nm (8 Å) ist.

9. Lithium-Sekundärbatterie nach einem der Ansprüche 1 bis 8, wobei das Kohlenstoffmaterial mit einem Graphit als Hauptbestandteil durch Calcinieren eines Gemischs aus dem Graphit und Pech gewonnen wird und eine Kristallitgröße in Richtung der c-Achse von mindestens 15 nm (150 Å) aufweist.

10. Lithium-Sekundärbatterie nach einem der Ansprüche 1 bis 9, wobei die Verbindung, die Lithium einschließen und abscheiden kann, durch die Formel LiₓMO₂ oder Li_{y}M₂O₄ dargestellt wird, wobei M ein Übergangselement ist und 0 ≤ x ≤ 1 sowie 0 ≤ y ≤ 2 gilt.

11. Lithium-Sekundärbatterie nach einem der Ansprüche 1 bis 9, wobei die Verbindung, die Lithium einschließen und abscheiden kann, ein Graphit mit eingelagertem Metalloxid, ein Graphit mit eingelagerten Anionen oder ein Halogen oder ein Graphit mit eingelagertem Halogenid ist.

12. Lithium-Sekundärbatterie nach einem der Ansprüche 1 bis 9, wobei die Verbindung, die Lithium einschließen und abscheiden kann, ein leitfähiges Polymer oder ein dotierungsstoffhaltiges leitfähiges Polymer ist.

13. Lithium-Sekundärbatterie nach einem der Ansprüche 1 bis 12, wobei der zu lösende Elektrolyt aus der Gruppe ausgewählt ist, die aus LiPF₆, LiBF₄, LiClO₄, LiCF₃SO₃, LiC₄F₉SO₃, LiN(CF₃SO₂)₂ und LiAsF₆ besteht.

## Revendications

1. Batterie secondaire au lithium comprenant :
une électrode positive comprenant principalement un composé capable d'inclure et de décharger du lithium,
une électrode négative comprenant principalement un matériau carboné qui comprend un graphite comme composant unique ou principal ayant a) une valeur d du plan de réseau cristallin (002) de 0,335 nm (3,35 A) à 0,34 nm (3,40 Å) et b) une taille de cristallite dans la direction de l'axe c) d'au moins 15 nm (150 Å);
un séparateur placé entre ladite électrode positive et ladite électrode négative et,
une solution électrolyte d'un soluté électrolyte dissous dans un solvant mixte constitué essentiellement de 20 à 80 % en volume de carbonate d'éthylène et de 80 à 20 % en volume d'au moins un solvant à point d'ébullition bas choisi dans le groupe constitué par le carbonate de diméthyle, le carbonate de diéthyle, le 1,2-diméthoxyéthane, le 1,2-diéthoxy-éthane et l'éthoxyméthoxyéthane.

2. Batterie secondaire au lithium selon la revendication 1, caractérisée en ce que ledit solvant mixte est constitué essentiellement par du carbonate d'éthyle et du carbonate de diméthyle.

3. Batterie secondaire au lithium selon la revendication 1, caractérisée en ce que ledit solvant mixte est constitué essentiellement par du carbonate d'éthylène et du carbonate de diéthyle.

4. Batterie secondaire au lithium selon la revendication 1, caractérisée en ce que ledit solvant mixte est constitué essentiellement par du carbonate d'éthylène, du carbonate de diméthyle et du carbonate de diéthyle.

5. Batterie secondaire au lithium selon l'une quelconque des revendications 1 à 4, caractérisée en ce que ledit graphite a un diamètre de particules moyen de 1 à 30 µm.

6. Batterie secondaire au lithium selon l'une quelconque des revendications 1 à 5, caractérisée en ce que ledit graphite a une surface spécifique de 0,5 à 50 m²/g.

7. Batterie secondaire au lithium selon l'une quelconque des revendications 1 à 6, caractérisée en ce que ledit graphite a une masse volumique vraie de 1,9 à 2,3 g / cm³.

8. Batterie secondaire au lithium selon l'une quelconque des revendications 1 à 7, caractérisée en ce que ledit matériau carboné comprenant principalement un graphite est un mélange de graphite et d'un matériau carboné ayant une taille de cristallite dans la direction de l'axe c qui n'est pas supérieure à 0,8 nm (8 Å).

9. Batterie secondaire au lithium selon l'une quelconque des revendications 1 à 8, caractérisée en ce que ledit matériau carboné comprenant principalement un graphite est obtenu par calcination d'un mélange de graphite et de goudron et a une taille de cristallite dans la direction de l'axe c qui est d'au moins 15 nm (150 Å).

10. Batterie secondaire au lithium selon l'une quelconque des revendications 1 à 9, caractérisée en ce que ledit composé capable d'inclure et de décharger du lithium est représenté par la formule LiₓMO₂ ou Li_{y}M₂O₄, dans laquelle M est un élément de transition et 0 ≤ x ≤ 1 et 0 ≤ y ≤ 2.

11. Batterie secondaire au lithium selon l'une quelconque des revendications 1 à 9, caractérisée en ce que ledit composé capable d'inclure et de décharger du lithium est un graphite avec un oxyde métallique intercalé, un graphite avec un anion intercalé ou un graphite avec un halogène ou un halogénure intercalé.

12. Batterie secondaire au lithium selon l'une quelconque des revendications 1 à 9, caractérisée en ce que ledit composé capable d'inclure et de décharger du lithium est un polymère conducteur ou un polymère conducteur contenant un dopant.

13. Batterie secondaire au lithium selon l'une quelconque des revendications 1 à 12, caractérisée en ce que ledit soluté électrolyte est choisi dans le groupe constitué par LiPF₆, LiBF₄, LiClO₄, LiCF₃SO₃, LiC₄F₉SO₃, LiN(CF₃SO₂)₂ et LiAsF₆.
